# EUROPÄISCHE PATENTSCHRIFT

(11) **EP 0 953 714 B1**
(45) Veröffentlichungstag und Bekanntmachung des Hinweises auf die Patenterteilung: **07.05.2003**
(21) Anmeldenummer: 99105213.5
(22) Anmeldetag: 13.03.1999
(51) Int. Cl.: E06B 3/54, E06B 3/96

(54) **Verfahren zum Zusammenbau von Fenster- oder Türflügeln**
Method of assembling window or door frames
Méthode d'assemblage de châssis de fenêtre ou de porte

(30) Priorität: 29.04.1998 DE 19819086
(43) Veröffentlichungstag der Anmeldung: 03.11.1999
(73) Patentinhaber: ROTO FRANK Aktiengesellschaft, 70771 Leinfelden-Echterdingen (DE)
(72) Erfinder: Gruber, Reinhold, 97922 Lauda-Königshofen (DE)
(74) Vertreter: KOHLER SCHMID + PARTNER

(56) Entgegenhaltungen:
- EP-A- 0 071 502
- EP-A- 0 473 479
- DE-A- 3 318 684
- FR-A- 2 169 019
- FR-A- 2 192 237
- FR-A- 2 459 869
- US-A- 4 151 696

## Beschreibung

Die Erfindung betrifft ein Verfahren zum Zusammenbau von Fenster- oder Türflügeln, wobei wenigstens ein Rahmenprofilteil mittels eines Klebemittels mit einer Verglasung verklebt wird und wobei Rahmenprofilteile und der Rand der Verglasung an einer Glashaltenut der Rahmenprofilteile unter Bildung zumindest eines zur Aufnahme von Klebemittel dienenden Zwischenraumes zwischen der Verglasung und dem oder den damit zu verklebenden Rahmenprofilteilen zusammengesteckt und die Rahmenprofilteile zu einem die Verglasung in deren Randumfangsrichtung wenigstens teilweise umschließenden Rahmen zusammengefügt werden, ehe eine Verbindung zwischen den Rahmenprofilteilen wirksam wird. Die Erfindung betrifft weiterhin die Verwending eines Rahmenprofilteils zür Dürchführung des vorstehenden Verfahrens

Aus der Druckschrift DE-A-33 18 684 ist ein gattungsgemäßes Verfahren bekannt, im Laufe dessen auf Gehrung geschnittene und mit einer Glashaltenut versehene gattungsgemäße Rahmenprofilteile aus Kunststoff im Bereich ihrer Gehrungsflächen zum Verschweißen bis zur Durchplastifizierung erhitzt, anschließend mittels einer Spannvorrichtung auf eine Isolierglasscheibe aufgesteckt und dabei unter Druck zu einem die Isolierglasscheibe umschließenden Rahmen zusammengefügt werden. Nach dem Wirksamwerden der Schweißverbindung zwischen den Rahmenprofilteilen, d.h. nach dem Abkühlen der Schweißnahtbereiche, wird die Baueinheit aus Rahmen und Isolierglasscheibe der Spannvorrichtung entnommen. In einem weiteren Arbeitsgang wird dann Dichtklebemittel in beidseits der Verglasung gebildete Zwischenräume zwischen der Verglasung und den Rahmenprofilteilen eingebracht. Das Dichtklebemittel dient u.a. dazu, die Rahmenprofilteile bzw. den durch diese gebildeten Rahmen und die Isolierglasscheibe zu einer unlösbaren Einheit miteinander zu verbinden. Ein weiteres vorbekanntes Verfahren der eingangs beschriebenen Gattung ist gegenüber dem Verfahren nach DE-A-33 18 684 dahingehend abgewandelt, daß das Dichtklebemittel zum Verkleben der Rahmenprofilteile mit der Verglasung des betreffenden Fensteroder Türflügels in einem dem Aufstecken der Rahmenprofilteile auf die Verglasung zeitlich vorausgehenden Arbeitsschritt in die Glashaltenut der Rahmenprofilteile aufgegeben wird.

Ein weiteres Verfahren, das alle Merknale des Oberbegriffs des Anspruchs 1 einschließt, ist aus der Druckschrift EP-A-71 502 bekannt.

Verfahrensbezogen hat sich die vorliegende Erfindung zum Ziel gesetzt, ein insbesondere hinsichtlich der Taktzeit optimiertes Verfahren zum Zusammenbau von Fenster- oder Türflügeln bereitzustellen.

Die verfahrensbezogene Aufgabe wird erfindungsgemäß dadurch gelöst, daß im Laufe eines Verfahrens der eingangs beschriebenen Art während des Wirksamwerdens der Verbindung zwischen den Rahmenprofilteilen Klebemittel in den zumindest einen Zwischenraum zwischen der Verglasung und dem oder den damit zu verklebenden Rahmenprofilteilen eingebracht und wenigstens teilweise wirksam wird. Im Sinne der Erfindung wird die Verbindung der Rahmenprofilteile zu dem Rahmen der Verglasung zeitgleich mit der Klebeverbindung zwischen den Rahmenprofilteilen bzw. dem Rahmen und der Verglasung hergestellt. Infolge der Parallelisierung der beiden genannten Arbeitsgänge ergibt sich eine verhältnismäßig kurze Taktzeit für den Zusammenbau des betreffenden Fensteroder Türflügels. Gegenüber einer Verfahrensvariante mit dem Zusammenfügen der Rahmenprofilteile vorausgehendem Einbringen des Klebemittels zeichnet sich die erfindungsgemäße Vorgehensweise zum einen dadurch aus, daß zum Zeitpunkt des Einbringens des Klebemittels der dieses aufnehmende Zwischenraum bereits vorliegt und folglich die zur Herstellung einer wirksamen Klebeverbindung benötigte Klebemittelmenge exakt bestimmt werden kann. Aus den Zwischenräumen beim Zusammenstecken von Rahmenprofilteilen und Verglasung herausgedrückte Klebemittelüberschüsse werden folglich ebenso vermieden wie zu geringe und für die Herstellung einer dauerhaften Verbindung zwischen den Rahmenprofilteilen und der Verglasung nicht ausreichende Klebstoffmengen. Zum anderen ist im Falle des erfindungsgemäßen Verfahrens ausgeschlossen, daß Klebemittel in das betreffende Rahmenprofilteil eingebracht wird, letzteres aber anschließend beispielsweise wegen betrieblicher Störungen des Verfahrensablaufes nicht vor dem Abbinden des Klebemittels an der Verglasung angebracht werden kann und demzufolge an dem Rahmenprofilteil abgebundenes Klebemittel von diesem wieder zu entfernen ist, ehe das Rahmenprofilteil erneut verwendet werden kann.

Für die Wirksamkeit bzw. Dauerhaftigkeit der Klebeverbindung zwischen dem oder den Rahmenprofilteilen und der Verglasung von großer Bedeutung ist die Anordnung der Klebestellen, wobei im Interesse der Wirtschaftlichkeit des Verfahrens Wert darauf zu legen ist, daß eine wirksame bzw. dauerhafte Klebeverbindung mit einer möglichst geringen Klebemittelmenge erzielt wird.

In diesem Sinne ist in vorteilhafter Ausgestaltung des erfindungsgemäßen Verfahrens vorgesehen, daß zumindest ein Zwischenraum zur Aufnahme von Klebemittel im Bereich der Lagerung eines Beschlagteils an dem betreffenden Rahmenprofilteil gebildet wird und das Klebemittel in diesem Bereich in den zumindest einen Zwischenraum eingebracht wird und/oder daß zumindest ein sich in Längsrichtung des betreffenden Rahmenprofilteils erstreckender Zwischenraum zur Aufnahme von Klebemittel gebildet und Klebemittel an mehreren in Längsrichtung des Rahmenprofilteils gegeneinander versetzten Stellen in den oder die Zwischenräume eingebracht wird und/oder daß wenigstens ein sich in Längsrichtung des betreffenden Rahmenprofilteils erstreckender Zwischenraum zur Aufnahme von Klebemittel bezogen auf die Verglasungsebene beidseits der Verglasung gebildet und Klebemittel an in Längsrichtung des Rahmenprofilteils gegeneinander versetzten und wechselweise auf der einen oder der anderen Seite der Verglasung liegenden Stellen in den oder die Zwischenräume eingebracht wird und/oder daß wenigstens ein Zwischenraum zur Aufnahme von Klebemittel beidseits der Verglasung gebildet und Klebemittel an in der parallel zu der Verglasungsebene verlaufenden Querrichtung des betreffenden Rahmenprofilteils gegeneinander versetzten und beidseits der Verglasung angeordneten Stellen in den oder die Zwischenräume eingebracht wird. Bei Einbringen von Klebemittel an mehreren Stellen ergibt sich eine verhältnismäßig geringe Taktzeit, wenn Klebemittel an sämtlichen oder lediglich an einem Teil der Klebestellen während des Wirksamwerdens der Verbindung zwischen den Rahmenprofilteilen aufgegeben wird. Beispielsweise im Falle von in der parallel zu der Verglasungsebene verlaufenden Querrichtung eines Rahmenprofilteils gegeneinander versetzten Klebestellen kann an den unten liegenden Stellen Klebemittel bereits während des Wirksamwerdens der Verbindung zwischen den Rahmenprofilteilen eingebracht werden und sich das Einbringen von Klebemittel an den höher liegenden Klebestellen an das Herstellen der Verbindung zwischen den Rahmenprofilteilen anschließen.

Zum Verbringen des Klebemittels an die optimale Klebestelle bieten sich erfindungsgemäß mehrere Möglichkeiten. Bevorzugt wird eine Verfahrensvariante, im Falle derer wenigstens ein Zwischenraum zur Aufnahme von Klebemittel über zumindest einen den Rahmen durchsetzenden und in den Zwischenraum mündenden Zufuhrkanal für Klebemittel mit der Rahmenaußenseite verbunden wird, ehe Klebemittel durch den oder die Zufuhrkanäle in den betreffenden Zwischenraum eingebracht wird. In weiterer bevorzugter Ausgestaltung des erfindungsgemäßen Verfahrens wird der oder die Zufuhrkanäle für Klebemittel der Einfachheit halber erbohrt.

Zur Vermeidung einer Beeinträchtigung des Erscheinungsbildes des Fenster- oder Türflügels wird im Falle einer weiteren Variante des erfindungsgemäßen Verfahrens der oder die Zufuhrkanäle für Klebemittel in eine von der oder den Rahmensichtflächen abliegende Außenfläche des Rahmens, gegebenenfalls in dessen Falzumfangsfläche, mündend erstellt.

Das Klebemittel über Zufuhrkanäle der vorstehend beschriebenen Art in den oder die Zwischenräume zur Aufnahme von Klebemittel einzubringen, bietet sich insbesondere im Falle eines nach der Erfindung ausgestalteten Verfahrens an, das dadurch gekennzeichnet ist, daß wenigstens ein Zwischenraum für Klebemittel vor dessen Einbringen allenfalls bis auf eine Zufuhröffnung für Klebemittel nach außen abgedichtet wird. Durch die Abdichtung des Zwischenraums wird das von diesem maximal aufnehmbare Klebemittelvolumen eindeutig definiert.

Erfindungsgemäß vorgesehen ist schließlich die Verwendung eines Rahmenprofilteils mit den in Patentanspruch 10 aufgeführten Merkmalen zur Durchführung des vorstehend beschriebenen Verfahrens.

Nachstehend wird die Erfindung anhand beispielhafter schematischer Darstellungen näher erläutert. Es zeigen:
- Figur 1: einen Querschnitt durch einen Fensterflügel im Bereich eines Rahmenprofilteils,
- Figur 2: eine Vorrichtung zum Zusammenbau des Fensterflügels nach Figur 1 und
- Figur 3: den Fensterflügel gemäß Figur 1 in der Draufsicht senkrecht zu seiner Hauptebene.

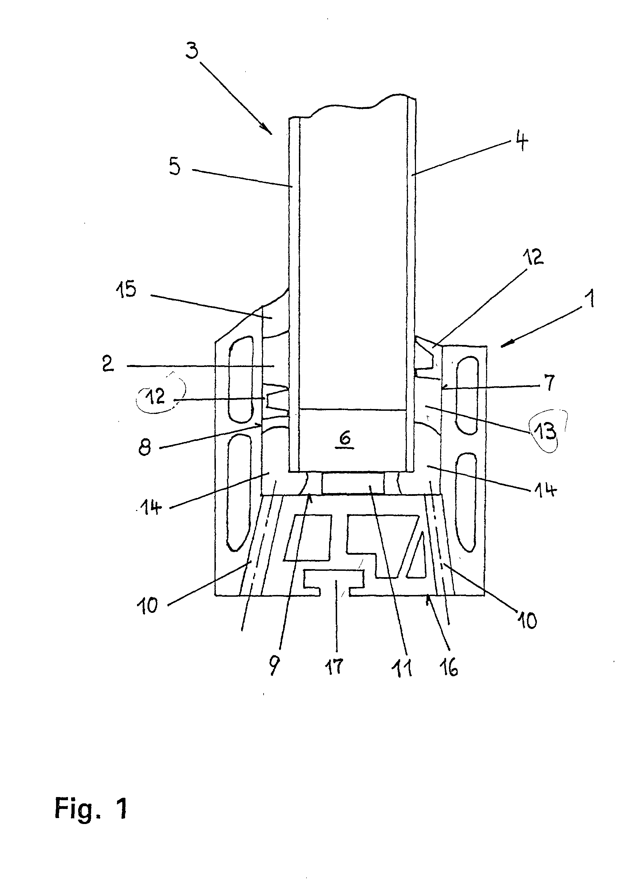

Ausweislich Figur 1 ist ein Rahmenprofilteil 1 mit einer Glashaltenut 2 versehen, die den Rand einer Verglasung 3 aufnimmt. Bei der Verglasung 3 handelt es sich um eine Doppelverglasung mit einer der Rauminnenseite zugeordneten Innenscheibe 4 und einer der Raumaußenseite zugeordneten Außenscheibe 5. Innenscheibe 4 und Außenscheibe 5 sind in herkömmlicher Art und Weise durch einen Abstandhalter 6 voneinander getrennt.

Die Glashaltenut 2 wird begrenzt von zwei parallelen Nutwänden 7, 8 sowie einem senkrecht dazu verlaufenden Nutgrund 9. In den Eckbereichen der Glashaltenut 2 münden in einer Querschnittsebene liegende Zufuhrkanäle 10 für Klebemittel in den Nutgrund 9. Die Verglasung 3 stützt sich an dem Nutgrund 9 über Distanzklötze 11 ab, von denen in Figur 1 einer erkennbar ist. Als Lippendichtungen ausgebildete Dichtungen 12 aus Gummi sind an den Nutwänden 7 der Glashaltenut 2 angeklebt und erstrecken sich leistenartig in deren Längsrichtung. Die Dichtungen 12 dichten einen zwischen der Verglasung 3 und den Nutwänden 7, 8 sowie dem Nutgrund 9 der Glashaltenut 2 gebildeten Zwischenraum 13 zu der Öffnung der Glashaltenut 2 hin ab. Der Zwischenraum 13 dient zur Aufnahme von Klebemittel 14 in Form von Silikon. Ein Dichtwulst 15 ebenfalls aus Silikon ist im Bereich der Öffnung der Glashaltenut 2 zwischen der Außenscheibe 5 und der dieser gegenüberliegenden Nutwand 8 der Glashaltenut 2 vorgesehen. Eine Falzumfangsfläche 16 des Rahmenprofilteils 1 weist eine hinterschnittene Beschlagteilnut 17 auf zur Lagerung von Beschlagteilen, mittels derer der gezeigte Fensterrahmen an einem zugehörigen gebäudeseitigen Festrahmen angebracht wird.

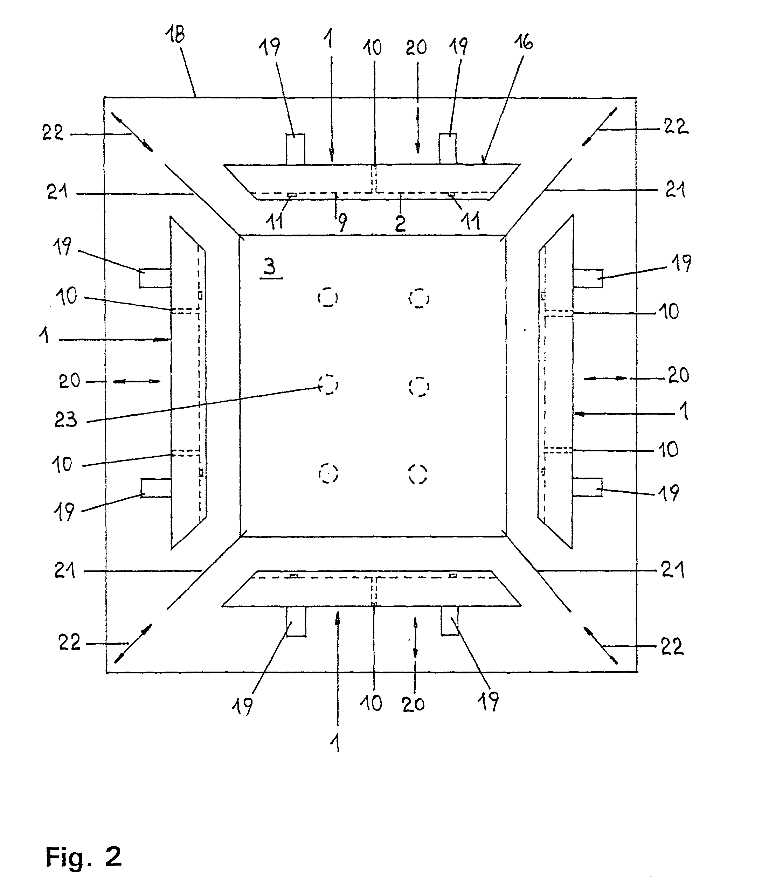

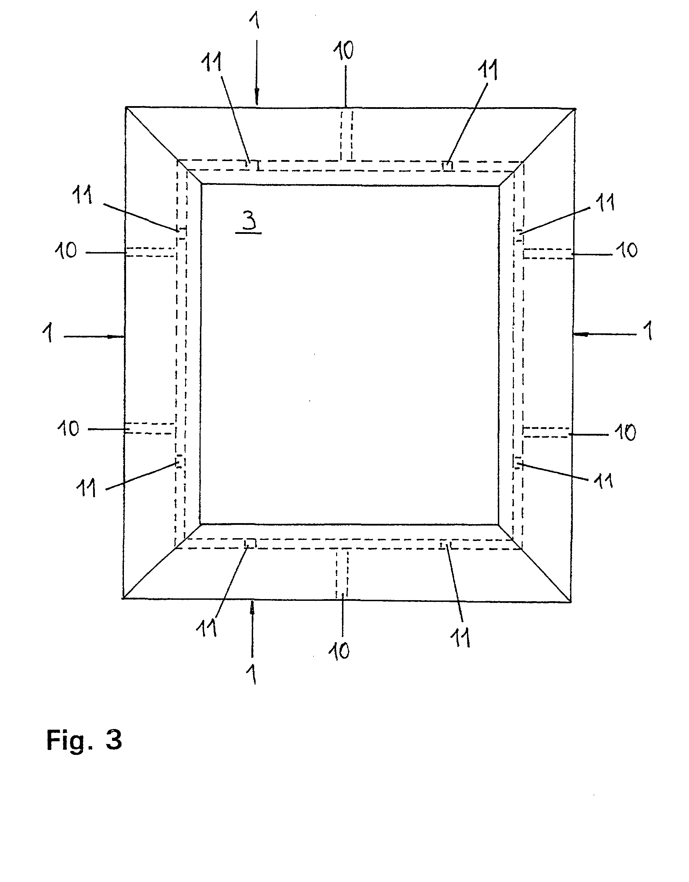

Die Herstellung des in Figur 1 ausschnittweise gezeigten Fensterflügels erfolgte wie nachstehend anhand der Figuren 2 und 3 beschrieben.

Ausweislich Figur 2 weist eine Vorrichtung zum Zusammenbau von Fenster- oder Türflügeln einen Auflagetisch 18 auf, welcher insgesamt vier Rahmenprofilteile 1 sowie die Verglasung 3 lagert. Die aus Kunststoff gefertigten Rahmenprofilteile 1 sind an ihren Enden auf Gehrung geschnitten. Die Zufuhrkanäle 10 für Klebemittel sind vor dem Auflegen der Rahmenprofilteile 1 auf den Auflagetisch 18 ausgehend von den Falzumfangsflächen 16 der Rahmenprofilteile 1 erbohrt worden. Spannpratzen 19 einer Spannvorrichtung, wie sie im wesentlichen aus DE-A-33 18 684 bekannt ist, halten die Rahmenprofilteile 1 und sind mit diesen in Richtung von Doppelpfeilen 20 verfahrbar. Schweißspiegel 21 sind gemäß Figur 2 im Bereich zwischen den Enden der Rahmenprofilteile 1 angeordnet und in Richtung von Doppelpfeilen 22 bewegbar. In der Glashaltenut 2 der Rahmenprofilteile 1 sind an dem Nutgrund 9 jeweils zwei Distanzklötze 11 angebracht. Die Verglasung 3 ruht auf Auflagern 23, über welche sie mit Abstand von dem Auflagetisch 1 gehalten wird.

Zur Montage werden die auf Gehrung geschnittenen und mit Zufuhrkanälen 10 für Klebemittel versehenen Rahmenprofilteile 1 mit Hilfe der Spannpratzen 19 zunächst aufeinander zu bewegt, bis sie mit ihren Enden an den Schweißspiegeln 21 zur Anlage kommen. Die Schweißspiegel 21 erwärmen die Enden der Rahmenprofilteile 1 dann bis zu deren Durchplastifizierung. Anschließend werden die Rahmenprofilteile 1 mittels der Spannpratzen 19 über eine kurze Strecke voneinander weg bewegt, bis sie die Schweißspiegel 21 freigeben. Letztere werden nunmehr zu dem Rand des Auflagetischs 18 hin verfahren und sind dann außerhalb des Verbindungsbereiches der Rahmenprofilteile 1 angeordnet.

Die Rahmenprofilteile 1 werden anschließend mittels der Spannpratzen 19 gegeneinander bewegt, mit ihren plastifizierten Enden unter Druck aneinander gelegt und in dieser Lage, in welcher sie einen geschlossenen Rahmen bilden, solange gehalten, bis der Bereich der Schweißnähte abgekühlt und dadurch die Schweißverbindung zwischen den Rahmenprofilteilen 1 wirksam geworden ist.

Mit dem beschriebenen Zusammenfügen der Rahmenprofilteile 1 zu einem geschlossenen Rahmen läuft der Rand der Verglasung 3 in die Glashaltenut 2 der Rahmenprofilteile 1 ein. An dem Nutgrund 9 der Glashaltenut 2 stützt sich die Verglasung 3 dann über die Distanzklötze 11 ab. Quer zu ihrer Ebene ist die Verglasung 3 mit Abstand von den Nutwänden 7, 8 der Glashaltenut 2 angeordnet. Dementsprechend wurde der Zwischenraum 13 zur Aufnahme des Klebemittels 14 zwischen der Verglasung 3 und den Rahmenprofilteilen 1 mit deren Zusammenfügen ohne weiteres gebildet. Mit dem Zusammenfügen der Rahmenprofilteile 1 ebenfalls einhergegangen ist die Abdichtung des Zwischenraumes 13 durch die Dichtungen 12, die von den Nutwänden 7, 8 der Glashaltenut 2 vorstehend und in der Gebrauchslage abdichtend an der Innenscheibe 4 sowie der Außenscheibe 5 abgestützt sind.

Während die zusammengefügten Rahmenprofilteile 1 noch mittels der Spannpratzen 19 gehalten werden, d.h. noch während der Bereich der Schweißnähte der Rahmenprofilteile 1 erkaltet und dadurch die Schweißverbindung zwischen den Rahmenprofilteilen 1 wirksam wird, wird Klebemittel 14 durch die Zufuhrkanäle 10 in den Zwischenraum 13 zwischen der Verglasung 3 und den Rahmenprofilteilen 1 eingepreßt. Das Einbringen des Klebemittels 14 kann dabei von Hand oder automatisiert erfolgen. Auch das Abbinden des in den Zwischenraum 13 aufgegebenen Klebemittels 14 erfolgt noch während des Abkühlens der Schweißnähte der Rahmenprofilteile 1.

Nach dem Erkalten der Schweißnähte hat sich auch das Klebemittel 14 wenigstens teilweise verfestigt und eine wirksame Klebeverbindung zwischen der Verglasung 3 und den Rahmenprofilteilen 1 hergestellt. Nunmehr können die Spannpratzen 19 unter Freigabe der Rahmenprofilteile 1 bzw. des von diesen gebildeten Rahmens an den Rand des Auflagetischs 18 zurückverfahren und der zusammengebaute Fensterflügel von dem Auflagetisch 18 abgenommen werden.

Zur endgültigen Fertigstellung des Fensterflügels bedarf es nur noch einer geringfügigen Nachbearbeitung der von dem Auflagetisch 1 abgenommenen Einheit. Zum einen sind die beim Verschweißen im Bereich der Schweißnähte der Rahmenprofilteile 1 gebildeten Schweißraupen zu entfernen. Zum anderen wird der zwischen der Außenscheibe 5 und der dieser gegenüberliegenden Nutwand 8 der Glashaltenut 2 verbliebene Spalt durch Einspritzen von Silikon mittels des Dichtwulstes 15 abgedichtet. Der Dichtwulst 15 dient auch als Klebemittel und trägt zu einer wirksamen und haltbaren Klebeverbindung der Verglasung 3 mit den Rahmenprofilteilen 1 bzw. dem aus diesen bestehenden Rahmen bei.

Alternativ zu der vorstehend beschriebenen Vorgehensweise kann das Silikon für den umlaufenden Dichtwulst 15 auch bereits eingebracht werden, solange die Rahmenprofilteile 1 während des Erkaltens ihrer Schweißnähte mittels der Spannpratzen 19 aneinander gedrückt werden.

Figur 3 zeigt den fertigen Fensterrahmen. Einzelheiten wie etwa die Dichtungen 12 oder die Beschlagteilnut 17 sind der Übersichtlichkeit halber in Figur 3 nicht dargestellt.

## Patentansprüche

1. Verfahren zum Zusammenbau von Fenster- oder Türflügeln, wobei wenigstens ein Rahmenprofilteil (1) mittels eines Klebemittels (14) mit einer Verglasung (3) verklebt wird und wobei Rahmenprofilteile (1) und der Rand der Verglasung (3) an einer Glashaltenut (2) der Rahmenprofilteile (1) unter Bildung zumindest eines zur Aufnahme von Klebemittel (14) dienenden Zwischenraumes (13) zwischen der Verglasung (3) und dem oder den damit zu verklebenden Rahmenprofilteilen (1) zusammengesteckt und die Rahmenprofilteile (1) zu einem die Verglasung (3) in deren Randumfangsrichtung wenigstens teilweise umschließenden Rahmen zusammengefügt werden, ehe eine Verbindung zwischen den Rahmenprofilteilen (1) wirksam wird, **dadurch gekennzeichnet, daß** während des Wirksamwerdens der Verbindung zwischen den Rahmenprofilteilen (1) , dh. zeitgleich mit dem Arbeitsgang der Herstellung dieser Verbindung Klebemittel (14) in den zumindest einen Zwischenraum (13) zwischen der Verglasung (3) und dem oder den damit zu verklebenden Rahmenprofilteilen (1) eingebracht und wenigstens teilweise wirksam wird.

2. Verfahren nach Anspruch 1, **dadurch gekennzeichnet, daß** zumindest ein Zwischenraum (13) zur Aufnahme von Klebemittel (14) im Bereich der Lagerung eines Beschlagteils an dem betreffenden Rahmenprofilteil (1) gebildet wird und das Klebemittel (14) in diesem Bereich in den zumindest einen Zwischenraum (13) eingebracht wird.

3. Verfahren nach einem der vorhergehenden Ansprüche, **dadurch gekennzeichnet, daß** zumindest ein sich in Längsrichtung des betreffenden Rahmenprofilteils (1) erstreckender Zwischenraum (13) zur Aufnahme von Klebemittel (14) gebildet und Klebemittel (14) an mehreren in Längsrichtung des Rahmenprofilteils (1) gegeneinander versetzten Stellen in den oder die Zwischenräume (13) eingebracht wird.

4. Verfahren nach einem der vorhergehenden Ansprüche, **dadurch gekennzeichnet, daß** wenigstens ein sich in Längsrichtung des betreffenden Rahmenprofilteils (1) erstreckender Zwischenraum (13) zur Aufnahme von Klebemittel (14) bezogen auf die Verglasungsebene beidseits der Verglasung (3) gebildet und Klebemittel (14) an in Längsrichtung des Rahmenprofilteils (1) gegeneinander versetzten und wechselweise auf der einen oder der anderen Seite der Verglasung (3) liegenden Stellen in den oder die Zwischenräume (13) eingebracht wird.

5. Verfahren nach einem der vorhergehenden Ansprüche, **dadurch gekennzeichnet, daß** wenigstens ein Zwischenraum (13) zur Aufnahme von Klebemittel (14) beidseits der Verglasung (3) gebildet und Klebemittel (14) an in der parallel zu der Verglasungsebene verlaufenden Querrichtung des betreffenden Rahmenprofilteils (1) gegeneinander versetzten und beidseits der Verglasung (3) angeordneten Stellen in den oder die Zwischenräume (13) eingebracht wird.

6. Verfahren nach einem der vorhergehenden Ansprüche, **dadurch gekennzeichnet, daß** wenigstens ein Zwischenraum (13) zur Aufnahme von Klebemittel (14) über zumindest einen den Rahmen durchsetzenden und in den Zwischenraum (13) mündenden Zufuhrkanal (10) für Klebemittel (14) mit der Rahmenaußenseite verbunden wird, ehe Klebemittel (14) durch den oder die Zufuhrkanäle (10) in den betreffenden Zwischenraum (13) eingebracht wird.

7. Verfahren nach Anspruch 6, **dadurch gekennzeichnet, daß** der oder die Zufuhrkanäle (10) für Klebemittel (14) erbohrt werden.

8. Verfahren nach Anspruch 6 oder 7, **dadurch gekennzeichnet, daß** der oder die Zufuhrkanäle (10) für Klebemittel (14) in eine von der oder den Rahmensichtflächen abliegende Außenfläche des Rahmens, gegebenenfalls in dessen Falzumfangsfläche (16), mündend erstellt werden.

9. Verfahren nach einem der vorhergehenden Ansprüche, **dadurch gekennzeichnet, daß** wenigstens ein Zwischenraum (13) für Klebemittel (14) vor dessen Einbringen allenfalls bis auf eine Zufuhröffnung für Klebemittel (14) nach außen abgedichtet wird.

10. Verwendung eines Rahmenprofilteils (1) mit den nachstehenden Merkmalen zur Durchführung des Verfahrens nach einem der vorhergehenden Ansprüche:
- das Rahmenprofilteil (1) weist eine Glashaltenut (2) zur Aufnahme des Randes einer Verglasung (3) auf,
- das Rahmenprofilteil (1) bildet zwischen sich und der Verglasung (3) zumindest einen Zwischenraum (13) aus zur Aufnahme von Klebemittel (14) zum Verkleben des Rahmenprofilteils (1) mit der Verglasung (3),
- das Rahmenprofilteil (1) ist mit wenigstens einem Zufuhrkanal (10) für Klebemittel (14) versehen, der das Rahmenprofilteil (1) durchsetzt und den Zwischenraum (13) zur Aufnahme von Klebemittel (14) mit der Rahmenprofilteilaußenseite verbindet.

## Claims

1. Method of assembling window or door leaves, wherein at least one frame profile member (1) is adhesively secured by means of an adhesive (14) to glazing (3) and wherein frame profile members (1) and the edge of the glazing (3) are put together at a glass-retaining groove (2) of the frame profile members (1) to form at least one gap (13), serving to receive adhesive (14), between the glazing (3) and the frame profile member or members (1) to be adhesively secured thereto, and the frame profile members (1) are joined together to form a frame at least partially surrounding the glazing (3) in the direction of the circumferential edge thereof before a bond between the frame profile members (1) becomes effective, **characterised in that** as the connection between the frame profile members (1) is becoming effective, that is, simultaneously with the operation of producing this connection, adhesive (14) is introduced into the at least one gap (13) between the glazing (3) and the frame profile member or members (1) to be adhesively secured thereto and becomes at least partly effective.

2. A method according to claim 1, **characterised in that** at least one gap (13) for receiving adhesive (14) is formed in the region of the bearing of a fitting member on the relevant frame profile member (1) and **in that** region the adhesive (14) is introduced into the at least one gap (13).

3. A method according to any one of the preceding claims, **characterised in that** at least one gap (13) for receiving adhesive (14) and extending in the lengthwise direction of the relevant frame profile member (1) is formed, and adhesive (14) is introduced into the gap or gaps (13) at several places staggered with respect to one another in the lengthwise direction of the frame profile member (1).

4. A method according to any one of the preceding claims, **characterised in that** at least one gap (13) for receiving adhesive (14) and extending in the lengthwise direction of the relevant frame profile member (1) is formed in relation to the glazing plane on both sides of the glazing (3) and adhesive (14) is introduced into the gap or gaps (13) at places staggered with respect to one another in the lengthwise direction of the frame profile member (1) and lying alternately on one or the other side of the glazing (13).

5. A method according to any one of the preceding claims, **characterised in that** at least one gap (13) for receiving adhesive (14) is formed on both sides of the glazing (3) and adhesive (14) is introduced into the gap or gaps (13) at places arranged on both sides of the glazing (3) and staggered with respect to one another in the transverse direction of the relevant frame profile member (1) running parallel to the glazing plane.

6. A method according to any one of the preceding claims, **characterised in that** at least one gap (13) for receiving adhesive (14) is connected with the outside of the frame by way of at least one inlet channel (10) for adhesive (14) passing through the frame and opening out into the gap (13), before adhesive (14) is introduced through the inlet channel or channels (10) into the relevant gap (13).

7. A method according to claim 6, **characterised in that** the inlet channel or channels (10) for adhesive (14) are produced by drilling.

8. A method according to claim 6 or 7, **characterised in that** the inlet channel or channels (10) for adhesive (14) are formed opening into an outer face of the frame, located remote from the visible frame face or faces, optionally in the rebate circumferential face (16).

9. A method according to any one of the preceding claims, **characterised in that**, prior to introduction of adhesive (14), at least one gap (13) for adhesive (14) is sealed with respect to the outside, at most with the exception of one inlet opening for adhesive (14).

10. Use of a frame profile member (1) having the following features for carrying out the method according to any one of the preceding claims:
- the frame profile member (1) comprises a glass-retaining groove (2) for receiving the edge of glazing (3),
- the frame profile member (1) forms between itself and the glazing (3) at least one gap (13) for receiving adhesive (14) for adhesively securing the frame profile member (1) with the glazing (3),
- the frame profile member (1) is provided with at least one inlet channel (10) for adhesive (14), which channel passes through the frame profile member (1) and connects the gap (13) for receiving adhesive (14) with the outside of the frame profile member.

## Revendications

1. Méthode d'assemblage de châssis de fenêtre ou de porte, au moins une pièce de profil de châssis (1) étant collée à un vitrage (3) au moyen d'un adhésif (14), et des pièces de profil de châssis (1) ainsi que le bord du vitrage (3) étant insérés dans une rainure de maintien du vitrage (2) des pièces de profil de châssis (1) en formant entre le vitrage (3) et la ou les pièces(s) de profil de châssis (1) à coller, au moins un espace intermédiaire (13) servant à recevoir de l'adhésif (14), et les pièces de profil de châssis (1) étant assemblées en un châssis entourant au moins en partie le vitrage (3) dans son sens circonférentiel, avant qu'une liaison entre les pièces de profil de châssis (1) ne prenne effet, **caractérisée en ce que** pendant que la liaison entre les pièces de profil de châssis (1) prend effet, c.à.d. simultanément à l'opération d'établissement de cette liaison de l'adhésif (14) est introduit dans au moins l'un des espaces intermédiaires (13) entre le vitrage (3) et la ou les pièce(s) de profil de châssis (1) à coller avec lui et y est effectif au moins en partie.

2. Méthode selon la revendication 1, **caractérisée en ce qu'**au moins un espace intermédiaire (13) pour recevoir de l'adhésif (14) est formé dans la partie du logement d'une pièce d'armature sur la pièce de profil de châssis (1) concernée et que l'adhésif (14) est introduit dans cette partie dans au moins un des espaces intermédiaires (13).

3. Méthode selon l'une des revendications précédentes, **caractérisée en ce qu'**au moins un espace intermédiaire (13) s'étendant en sens longitudinal de la pièce de profil de châssis (1) concernée est formé pour recevoir de l'adhésif (14) et que de l'adhésif (14) est introduit dans le ou les espace(s) intermédiaire(s) (13) à plusieurs points décalés les uns par rapport aux autres dans le sens longitudinal de la pièce de profil de châssis (1).

4. Méthode selon l'une des revendications précédentes, **caractérisée en ce qu'**au moins un espace intermédiaire (13) pour recevoir de l'adhésif (14) s'étendant en sens longitudinal de la pièce de profil de châssis (1) concernée est formé par rapport au niveau du vitrage des deux côtés du vitrage (3) et que de l'adhésif (14) est introduit dans le ou les espace(s) intermédiaire(s) (13) à des points décalés les uns par rapport aux autres dans le sens longitudinal de la pièce de profil de châssis (1) et alternativement sur l'un ou l'autre côté du vitrage (3).

5. Méthode selon l'une des revendications précédentes, **caractérisée en ce qu'**au moins un espace intermédiaire (13) pour recevoir de l'adhésif (14) est formé des deux côtés du vitrage (3) et que de l'adhésif (14) est introduit dans le ou les espace(s) intermédiaire(s) (13) à des points décalés les uns par rapport aux autres dans le sens transversal de la pièce de profil de châssis (1) concernée, sens qui est parallèle au niveau du vitrage, et des deux côtés du vitrage (3).

6. Méthode selon l'une des revendications précédentes, **caractérisée en ce qu'**au moins un espace intermédiaire (13) pour recevoir de l'adhésif (14) est relié au côté extérieur du châssis à l'aide d'au moins un canal d'alimentation (10) d'adhésif (14) traversant le châssis et débouchant dans l'espace intermédiaire (13), avant que de l'adhésif (14) ne soit introduit dans l'espace intermédiaire (13) concerné par le ou les canal(canaux) d'alimentation (10).

7. Méthode selon la revendication 6, **caractérisée en ce que** le ou les canal/canaux d'alimentation (10) pour de l'adhésif (14) sont percés.

8. Méthode selon la revendication 6 ou 7, **caractérisée en ce que** le ou les canal/canaux d'alimentation (10) pour de l'adhésif (14) sont réalisés de façon à déboucher dans une surface extérieure du châssis éloignée du ou des parement(s) du châssis, le cas échéant dans sa surface périphérique de la feuillure (16).

9. Méthode selon l'une des revendications précédentes, **caractérisée en ce qu'**au moins un espace intermédiaire (13) pour de l'adhésif (14) est totalement étanchéifié vers l'extérieur à l'exception d'un orifice d'alimentation d'adhésif (14) avant son introduction.

10. Utilisation d'une pièce de profil de châssis (1) dotée des caractéristiques suivantes pour la réalisation de la méthode selon l'une des revendications précédentes :
- la pièce de profil de châssis (1) présente une rainure de maintien du vitrage (2) pour loger le bord d'un vitrage (3),
- la pièce de profil de châssis (1) forme entre elle et le vitrage (3) au moins un espace intermédiaire (13) pour recevoir de l'adhésif (14) afin de coller la pièce de profil de châssis (1) avec le vitrage (3),
- la pièce de profil de châssis (1) est munie d'au moins un canal d'alimentation (10) pour de l'adhésif (14), canal qui traverse la pièce de profil de châssis (1) et relie l'espace intermédiaire (13) pour recevoir de l'adhésif (14) au côté extérieur de la pièce de profil de châssis (1).
